# EUROPEAN PATENT APPLICATION

(11) **EP 4 770 051 A1**
(43) Date of publication of application: **01.07.2026**
(21) Application number: 24907092.1
(22) Date of filing: 26.11.2024
(51) Int. Cl.: H04L 67/10, G06F 8/65

(54) **AIR CONDITIONER CONTROL DEVICE, AIR CONDITIONER CONTROL SYSTEM, CONTROL METHOD, AND PROGRAM**

(30) Priority: 22.12.2023 JP 2023217036
(71) Applicant: Mitsubishi Heavy Industries Thermal Systems, Ltd., Tokyo 100-8332 (JP)
(72) Inventor: KINUGASA, Hitoshi, Tokyo 100-8332 (JP); TAKAHASHI, Kazuyoshi, Tokyo 100-8332 (JP)
(74) Representative: Cabinet Beau de Loménie
(86) International application number: PCT/JP2024/041787
(87) International publication number: WO 2025/134704

(57) **Abstract**

This air conditioner control device is provided with: a mode change unit that performs individual changes that allow reception of rewrite data so that a plurality of outdoor machines or a plurality of indoor machines can receive rewrite data transmitted simultaneously; and a program transmission unit that divides the rewrite data and simultaneously transmits the divided rewrite data items to the plurality of outdoor machines or the plurality of indoor machines.

## Description

### Technical Field

The present disclosure relates to a control device of an air conditioner, a control system of an air conditioner, a control method, and a program.

Priority is claimed to Japanese Patent Application No. 2023-217036, filed December 22, 2023, the contents of which are incorporated herein by reference.

### Background Art

It is known to remotely rewrite a program of an air conditioner via a network.

For example, PTL 1 discloses a control device that monitors an operation state of an air conditioner and remotely controls rewriting of an operation control program of each air conditioner via a network.

### Citation List

### Patent Literature

[PTL 1] Japanese Unexamined Patent Application Publication No. 2004-294028

### Summary of Invention

### Technical Problem

The control device disclosed in PTL 1 discloses that the control device individually performs communication connection with a unit for which the operation control program is to be updated, and rewrites the operation control program.

However, when the control device individually performs communication connection with the unit to be updated and individually rewrites the operation control program, there is a problem in that it takes time to perform the rewrite work on all the units for which the operation control program is to be updated.

An object of the present disclosure is to solve the above-described problems, and an object of the present disclosure is to provide a control device of an air conditioner, a control system of an air conditioner, a control method, and a program.

### Solution to Problem

A control device of an air conditioner according to the present disclosure includes: a mode change unit that individually performs a change that enables a plurality of outdoor units or a plurality of indoor units to receive rewrite data that is simultaneously transmitted; and a program transmission unit that divides the rewrite data and simultaneously transmits each divided portion of the rewrite data to the plurality of outdoor units or the plurality of indoor units.

A control method according to the present disclosure includes: a step of individually performing a change that enables a plurality of outdoor units or a plurality of indoor units to receive rewrite data that is simultaneously transmitted; and a step of dividing the rewrite data and simultaneously transmitting each divided portion of the rewrite data to the plurality of outdoor units or the plurality of indoor units.

A program according to the present disclosure causes a computer to execute: a step of individually performing a change that enables a plurality of outdoor units or a plurality of indoor units to receive rewrite data that is simultaneously transmitted; and a step of dividing the rewrite data and simultaneously transmitting each divided portion of the rewrite data to the plurality of outdoor units or the plurality of indoor units.

### Advantageous Effects of Invention

According to the control device of an air conditioner, the control system of an air conditioner, the control method, and the program according to the present disclosure, it is possible to shorten the time required for the rewrite work.

### Brief Description of Drawings

FIG. 1 is a schematic diagram of a control system according to a first embodiment.
FIG. 2 is a block diagram showing a functional configuration of a control device according to the first embodiment.
FIG. 3 is a diagram showing an example of processing of the control method according to the first embodiment.
FIG. 4 is a part I showing processing of the control method according to the first embodiment.
FIG. 5 is a part II showing processing of the control method according to the first embodiment.
FIG. 6 is a flowchart of a control method performed by the control device according to the first embodiment.
FIG. 7 is a flowchart of a control method performed by the control device according to the first embodiment.
FIG. 8 is a flowchart of processing performed by each of a plurality of outdoor units or a plurality of indoor units corresponding to each processing of the control device according to the first embodiment.
FIG. 9 is a flowchart of processing performed by each of a plurality of outdoor units or a plurality of indoor units corresponding to each processing of the control device according to the first embodiment.
FIG. 10 is a part of processing of a rewriting control method in a comparative example.
FIG. 11 is a hardware configuration diagram illustrating a configuration of a computer according to the present disclosure.

### Description of Embodiments

Hereinafter, each embodiment according to the present disclosure will be described with reference to the drawings. The drawings and specific configurations used in each embodiment should not be used to interpret the disclosure. The same or corresponding configurations are represented by the same reference signs and numerals in all drawings, and common description is not repeated.

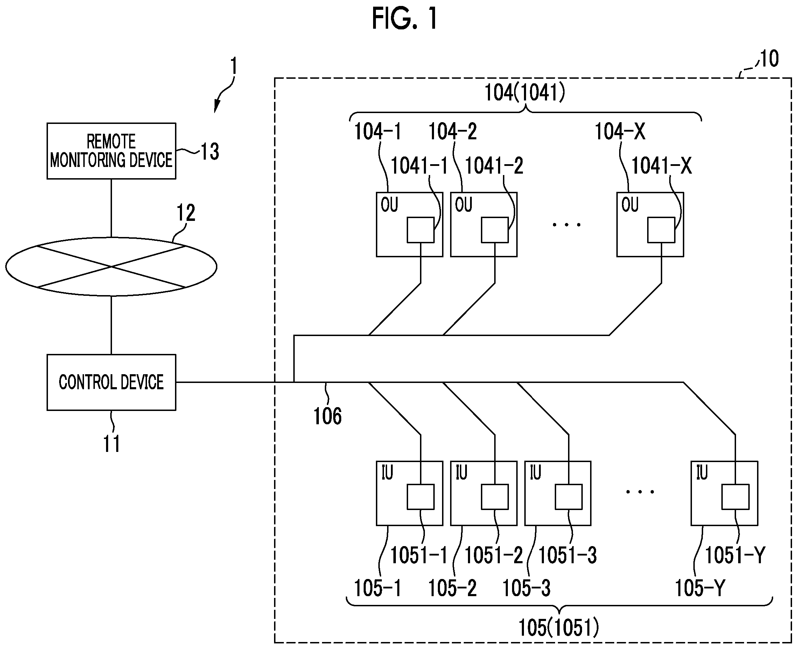

Hereinafter, a control device in the present disclosure will be described with reference to FIGS. 1 to 9.

### (Configuration of Control System)

A control system 1 of an air conditioner is used to control rewriting of an operation control program included in an indoor unit or an outdoor unit included in each air conditioner through a remote operation via a network.

As shown in FIG. 1, the control system 1 includes an air conditioning system 10, a control device 11 of an air conditioner, a network 12, and a remote monitoring device 13.

The air conditioning system 10 includes a plurality of outdoor units 104 or a plurality of indoor units 105. As an example, the air conditioning system 10 may include a plurality of outdoor units 104 (denoted as an outdoor unit "104-X") and a plurality of indoor units 105 (denoted as an indoor unit "105-Y").

The control device 11, the outdoor unit 104-X, and the indoor unit 105-Y are bus-connected by a communication line 106.

For example, a data transmission method by the above-described connection may conform to RS485.

### (Outdoor Unit or Indoor Unit)

Each of the outdoor units 104-X includes a CPU (hereinafter, referred to as a "microcomputer") having a non-volatile memory and a volatile memory. That is, the air conditioning system 10 includes a plurality of microcomputers 1041 (denoted as a microcomputer "1041-X").

Similarly, each indoor unit 105-Y includes a microcomputer. That is, the air conditioning system 10 includes a plurality of microcomputers 1051 (denoted as "microcomputer 1051-Y").

### (Control Device)

The control device 11 performs the control method of the present disclosure on a unit for which it is desired to update an operation control program (hereinafter, also referred to as a "specific unit"), among all units provided in each air conditioner (referring to an "outdoor unit 104-X or an indoor unit 105-Y, or both of the outdoor unit 104-X and the indoor unit 105-Y" included in the air conditioning system 10), and rewrites the operation control program of the specific unit to rewrite data. In the present embodiment, all the units refer to the entirety of "the outdoor unit 104-X and the indoor unit 105-Y".

Since the entirety of the units refers to "the outdoor unit 104-X or the indoor unit 105-Y, or both of the outdoor unit 104-X and the indoor unit 105-Y" included in the air conditioning system 10, the entirety of the units includes a plurality of outdoor units 104 or a plurality of indoor units 105.

The number of specific units is two or more, and the plurality of outdoor units 104 or the plurality of indoor units 105 in the entirety of the units correspond to the specific units.

In addition, the control device 11 is communicably connected to the remote monitoring device 13 via the network 12.

### (Remote Monitoring Device)

The remote monitoring device 13 monitors the entirety of the units from a remote location and requests the reception of the rewrite data remotely. That is, the remote monitoring device 13 requests the control device 11 to rewrite the operation control program included in the specific unit with the rewrite data.

When the request is received from the remote monitoring device 13 via the network 12, the control device 11 performs the control method of the present disclosure in order to rewrite the operation control program included in the specific unit with the rewrite data.

That is, the remote monitoring device 13 instructs a timing at which the operation control program included in each unit is rewritten with the rewrite data.

### (Configuration of Control Device)

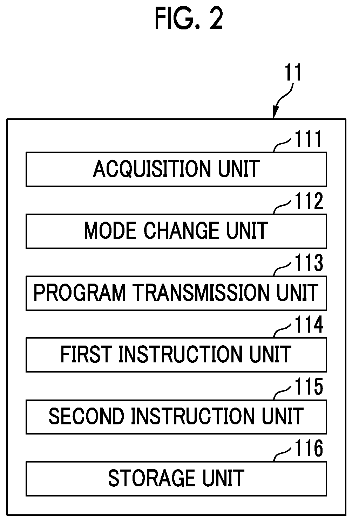

As shown in FIG. 2, the control device 11 includes an acquisition unit 111, a mode change unit 112, a program transmission unit 113, a first instruction unit 114, a second instruction unit 115, and a storage unit 116.

The operation of each unit in the control device 11 described below corresponds to at least a part of the control method of the present disclosure.

### (Acquisition Unit)

The acquisition unit 111 acquires the rewrite data from the remote monitoring device 13 via the network 12. For example, when the request is received from the remote monitoring device 13 via the network 12, the acquisition unit 111 acquires the rewrite data provided from the remote monitoring device 13.

In addition, the acquisition unit 111 may store the acquired rewrite data in the storage unit 116.

### (Mode Change Unit)

The mode change unit 112 individually performs a change that enables the plurality of outdoor units 104 (outdoor unit 104-X) or the plurality of indoor units 105 (indoor unit 105-Y) to receive the rewrite data that is simultaneously transmitted.

For example, the mode change unit 112 individually performs a change that allows the rewrite data to be received for each microcomputer included in two or more specific units.

In addition, the mode change unit 112 may individually perform a change that does not allow the rewrite data to be received for each microcomputer included in two or more specific units.

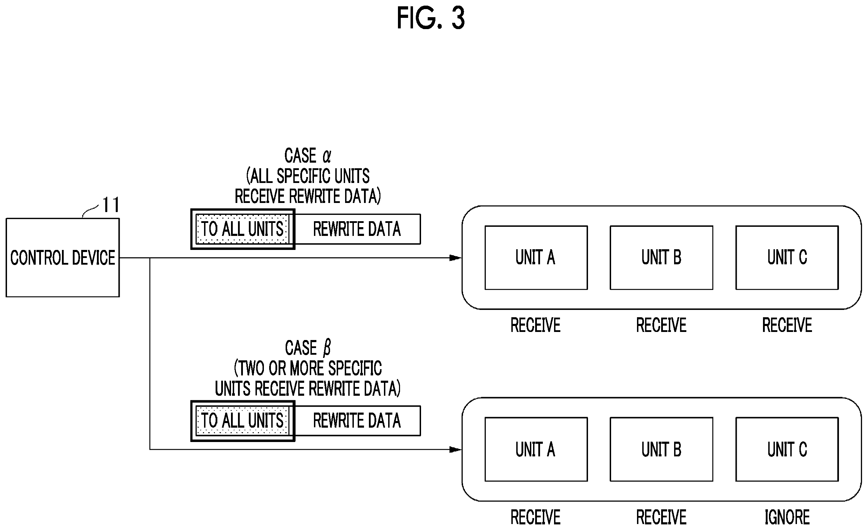

For example, as shown in FIG. 3, it is assumed that there are three units (unit A, unit B, and unit C) connected to the control device 11 as a whole.

For example, as in a case α, when all units included in the entire unit are specific units, it is desirable that the program transmission unit 113 transmits the rewrite data to all units.

On the other hand, as in a case β, when some units (unit A and unit B) included in the entire unit are specific units, it is desirable that the program transmission unit 113 transmits the rewrite data only to some units.

Therefore, the mode change unit 112 of the present disclosure individually performs, in advance, a change that allows the rewrite data to be received for each microcomputer included in two or more specific units. By changing the specific units (unit A and unit B) in advance to be able to receive the rewrite data, only the specific units enabled to receive the rewrite data can receive the rewrite data that is simultaneously transmitted.

The program transmission unit 113 can designate the entire unit as a destination (described as "to all units" in FIG. 3) by a multidrop connection, which is a feature of the transmission method conforming to RS485 described above, and can simultaneously transmit the rewrite data.

A unit including a microcomputer that has not been changed to be able to receive the rewrite data does not receive (ignores) the rewrite data simultaneously transmitted.

### (Operation of Microcomputer corresponding to Mode Change Unit)

Each microcomputer included in two or more specific units erases a rewrite area in the microcomputer in accordance with the change that allows the rewrite data to be received by the mode change unit 112.

In addition, each microcomputer included in two or more specific units may lock the rewrite area in the microcomputer in accordance with the change that does not allow the rewrite data to be received by the mode change unit 112.

### (Program Transmission Unit)

The program transmission unit 113 divides the rewrite data and performs the simultaneous transmission of each divided portion of the rewrite data to the plurality of outdoor units 104 (outdoor unit 104-X) or the plurality of indoor units 105 (indoor unit 105-Y).

For example, the program transmission unit 113 first divides the rewrite data into blocks of a predetermined size, and further divides each block into packets. Thereafter, the program transmission unit 113 sequentially performs the simultaneous transmission of each of the rewrite data divided into the packet unit to the microcomputer included in each of the two or more specific units. By using the broadcast address during the simultaneous transmission, the rewrite data is transmitted to the entire unit connected by the communication line 106.

For example, the predetermined capacity conforms to an erase unit (for example, 2 kilobytes) of a non-volatile memory of the microcomputer included in each of the outdoor unit 104-X or the indoor unit 105-Y. Hereinafter, the predetermined capacity is referred to as one block.

For example, the minimum division unit (packet unit) of the rewrite data is 32 bytes per packet. The division unit can be appropriately changed by the operator.

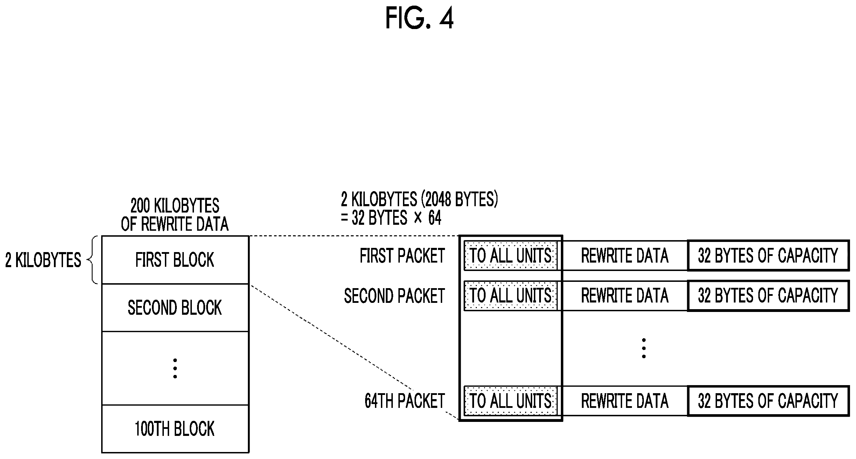

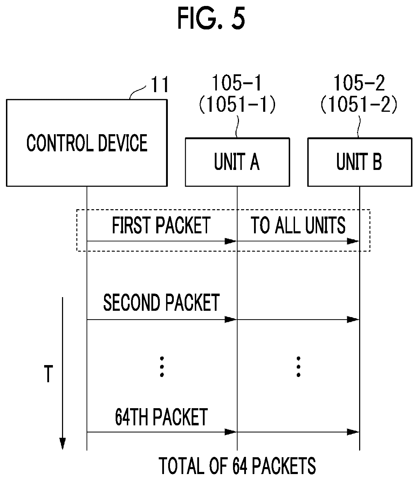

In addition, in a case where a transmission method conforming to RS485 is used, the divided portion of the rewrite data is sequentially transmitted by serial communication. As shown in FIG. 4, the program transmission unit 113 sequentially performs the simultaneous transmission of the rewrite data divided into the packet unit to the microcomputer included in each of the two or more specific units from the first packet to the 64th packet. As shown in FIG. 5, for example, it is assumed that the first packet is first simultaneously transmitted to the microcomputers (microcomputer 1051-1 and microcomputer 1051-2) included in each of the two specific units (unit A and unit B: indoor unit 105-1 and indoor unit 105-2), and then the second packet, and finally the 64th packet are transmitted in accordance with the elapse of the time axis T. As shown in FIG. 4 again, in a case where a predetermined capacity obtained by combining the first packet to the 64th packet is one block, the program transmission unit 113, after transmitting the first block, sequentially performs the simultaneous transmission from the first packet to the 64th packet constituting the second block in the same manner as for the first block. In this way, in a case where the rewrite data is simultaneously transmitted in sequence from the first block to the 100th block, as a result, 200 kilobytes of the rewrite data is simultaneously transmitted to the microcomputer included in each of the two or more specific units (unit A and unit B).

The transmission method may be parallel communication depending on the transmission method. In that case, the program transmission unit 113 performs the simultaneous transmission of each divided portion of the rewrite data to the microcomputer included in each of the two or more specific units.

In a case where the program transmission unit 113 performs the simultaneous transmission of each divided portion of the rewrite data, the program transmission unit 113 adds a code for detecting an error in the data. The added code is used for a parity check, a checksum, or a cyclic redundancy check (CRC) performed by the microcomputer. By using the code, the microcomputer can check whether or not there is a data transmission error.

In a case where a notification that there is a data transmission error is received from the microcomputer, the program transmission unit 113 individually retransmits the divided portion of the rewrite data corresponding to the block in which the data transmission error is determined to the microcomputer which notifies that there is a data transmission error.

### (First Instruction Unit)

The first instruction unit 114 instructs the plurality of outdoor units 104 (outdoor unit 104-X) or the plurality of indoor units 105 (indoor unit 105-Y) to determine whether or not there is a data transmission error in each divided portion of the rewrite data to be received.

For example, the first instruction unit 114 instructs each of the individual microcomputers included in the two or more specific units to determine whether or not there is a data transmission error in each of the rewrite data divided in a packet unit to be received by the individual microcomputer. That is, the first instruction unit 114 causes the individual microcomputer to determine whether or not there is a data transmission error in a block, which is a set of the rewrite data divided in a packet unit.

The first instruction unit 114 instructs the individual microcomputer in a case where the total of the rewrite data divided in a packet unit reaches a predetermined capacity (one block).

That is, the first instruction unit 114 instructs the microcomputer each time the microcomputer of the specific unit receives the rewrite data for one block. For example, in a case where the microcomputer receives the rewrite data from a first block to a 100th block, the first instruction unit 114 instructs the microcomputer to determine whether or not there is a data transmission error in the first block in a case where the microcomputer receives the rewrite data of the first block. The first instruction unit 114 similarly instructs the microcomputer in a case where the microcomputer receives the rewrite data of the second block. In this way, the first instruction unit 114 instructs the microcomputer to determine whether or not there is a data transmission error in each block at each timing at which the microcomputer receives the rewrite data from the first block to the 100th block.

In a case where the control device 11 receives a notification of a data transmission error in any of blocks determined by the individual microcomputer, the first instruction unit 114 instructs the erasing of the block in which the data transmission error is determined. Thereafter, the program transmission unit 113 individually retransmits the divided portion of the rewrite data corresponding to the erased block to the microcomputer which notifies that there is a data transmission error.

### (Operation of Microcomputer corresponding to First Instruction Unit)

Each of the individual microcomputers included in the two or more specific units determines whether or not there is a data transmission error in each block in each of the rewrite data divided in a packet unit to be received, in response to the instruction of the first instruction unit 114. In a case where there is a transmission error, the microcomputer notifies the control device 11 of the transmission error and erases the block in which the transmission error is determined in response to the instruction of the first instruction unit 114.

For example, the microcomputer simply determines a data transmission error for each block using a checksum in response to an instruction from the first instruction unit 114.

In a case where there is no transmission error, the microcomputer sequentially writes the rewrite data for a predetermined capacity (one block) into the non-volatile memory.

### (Second Instruction Unit)

The second instruction unit 115 instructs each of the plurality of outdoor units 104 (outdoor unit 104-X) or the plurality of indoor units 105 (indoor unit 105-Y) to determine whether or not there is a data transmission error in all of the received rewrite data.

For example, the second instruction unit 115 instructs each of the individual microcomputers included in the two or more specific units to determine whether or not there is a data transmission error in all of the rewrite data (all blocks) received by the individual microcomputer.

The second instruction unit 115 instructs the individual microcomputer in a case where the individual microcomputer receives the rewrite data in all blocks.

In a case where the control device 11 receives a notification of a data transmission error from any of the microcomputers, the second instruction unit 115 instructs the non-volatile memory of the microcomputer which notifies the data transmission error to erase all blocks written therein.

The mode change unit 112 individually performs a change to make the rewrite data unreceivable in advance for the microcomputer which does not notify the data transmission error, and then the program transmission unit 113 performs the simultaneous transmission of the divided portion of the rewrite data again from the beginning. This is because the simultaneous transmission is not necessary for the microcomputer which does not notify the data transmission error, that is, the microcomputer that has successfully performed the writing. The mode change unit 112 may change the reception of the rewrite data for the microcomputer which does not notify the data transmission error before the instruction to erase all blocks from the second instruction unit 115.

### (Operation of Microcomputer corresponding to Second Instruction Unit)

The individual microcomputer included in each of the two or more specific units determines whether or not there is a data transmission error in all of the received rewrite data (all blocks) in response to the instruction from the second instruction unit 115. In a case where there is a transmission error, the microcomputer notifies the control device 11 of the transmission error and erases all blocks written in the non-volatile memory in response to the instruction from the second instruction unit 115.

For example, the microcomputer finally determines the data transmission error for all of the rewrite data (all blocks) written in the non-volatile memory using the CRC in response to the instruction from the second instruction unit 115.

In a case where there is no transmission error, the writing of the received rewrite data is completed in each of the individual microcomputers.

Regarding the data transmission error, the data transmission error may be simply determined in response to the instruction from the first instruction unit 114, and then the data transmission error may be finally determined in response to the instruction from the second instruction unit 115. That is, the following combinations of the data transmission error detection method in response to the instruction from the first instruction unit 114 and the data transmission error detection method in response to the instruction from the second instruction unit 115 are considered. The combinations are a combination of the parity check as the simple determination and the checksum as the final determination, a combination of the parity check as the simple determination and the CRC as the final determination, and a combination of the checksum as the simple determination and the CRC as the final determination as described above.

### (Storage Unit)

The storage unit 116 stores the rewrite data acquired by the acquisition unit 111.

### (Control Method)

The control method in the present embodiment will be described.

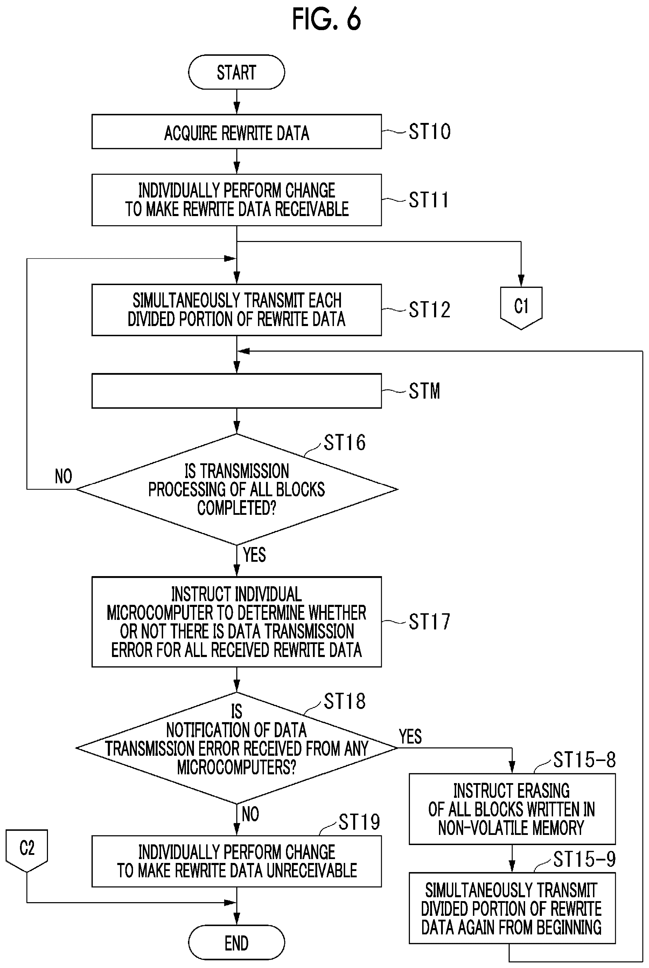

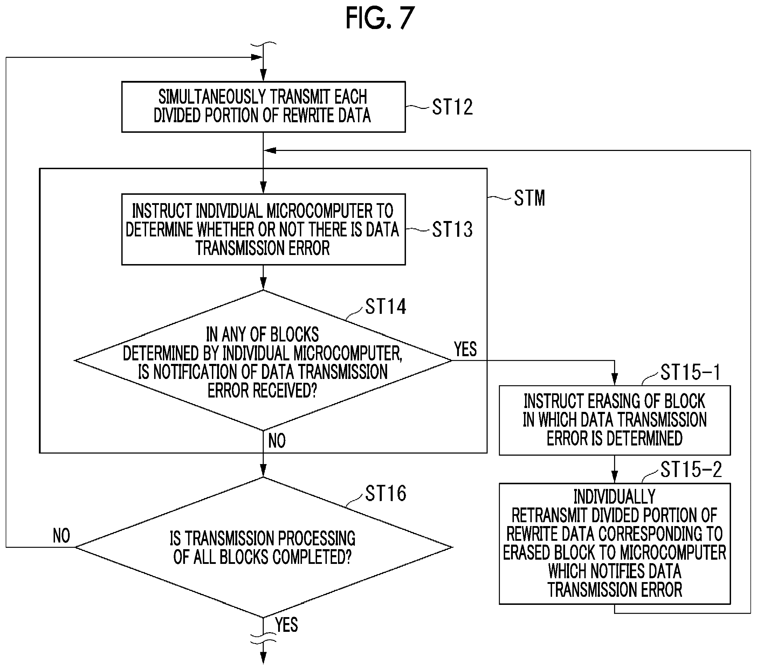

The control method in the present embodiment is performed according to the flowcharts shown in FIGS. 6 and 7.

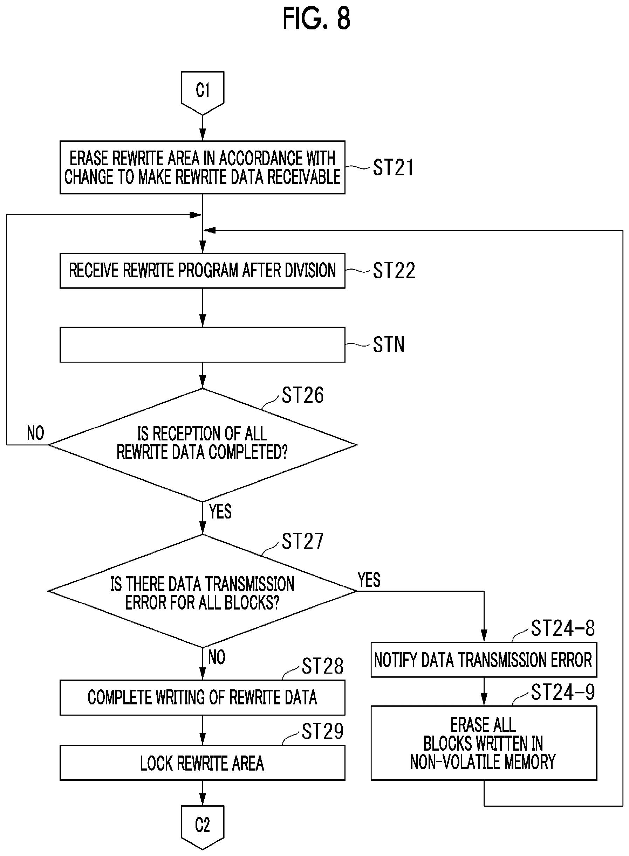

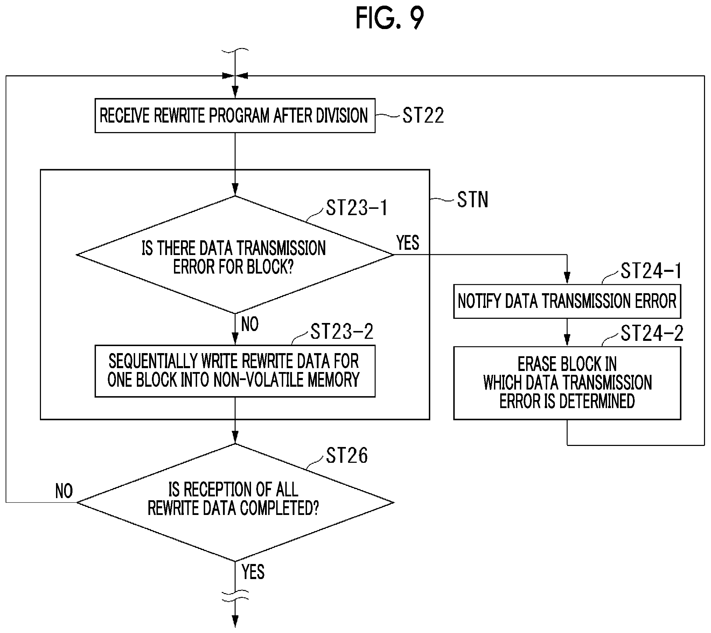

In addition, FIGS. 8 and 9 are flowcharts of the processing performed by the microcomputer included in one specific unit in response to each processing of the control device 11. The control device 11 communicates with the plurality of microcomputers that perform the processing in FIGS. 8 and 9.

First, the acquisition unit 111 of the control device 11 acquires the rewrite data from the remote monitoring device 13 via the network 12 (step ST10).

Next, the mode change unit 112 of the control device 11 individually performs a change that enables the plurality of outdoor units 104 (outdoor unit 104-X) or the plurality of indoor units 105 (indoor unit 105-Y) to receive the rewrite data that is simultaneously transmitted, which are two or more specific units(step ST11).

For example, the mode change unit 112 individually performs a change that allows the rewrite data to be received for each microcomputer included in two or more specific units.

The microcomputer performs step ST21 described later with the processing in step ST11 as a trigger via the coupler C1.

Next, the program transmission unit 113 of the control device 11 first divides the rewrite data into a predetermined capacity, and further divides the predetermined capacity into a packet unit. Thereafter, the program transmission unit 113 performs simultaneous transmission of each of the rewrite data divided into the packet units to the microcomputer included in each of the two or more specific units (step ST12).

Next, the first instruction unit 114 of the control device 11 instructs each individual microcomputer included in each of the two or more specific units to determine whether or not there is a data transmission error in each of the rewrite data divided into the packet units received by the individual microcomputers (step ST13).

Next, the control device 11 determines whether or not a notification of a data transmission error has been received in any of blocks determined by the individual microcomputer (step ST14).

In a case where the notification of the data transmission error is received (step ST14: YES), first, the first instruction unit 114 of the control device 11 instructs erasing of the block in which the data transmission error is determined (step ST15-1). Thereafter, the program transmission unit 113 individually retransmits the divided portion of the rewrite data corresponding to the erased block to the microcomputer which notifies the data transmission error (step ST15-2). Thereafter, the processing in step ST13 is performed again.

In a case where the notification of the data transmission error is not received (step ST14: NO), the control device 11 advances the processing to the next step ST16.

The processing in steps ST13 to ST14 is instructed to the microcomputer each time the microcomputer of the specific unit receives the rewrite data for one block as step STM.

Next, the control device 11 determines whether or not the transmission processing of all blocks constituting the rewrite data is completed (step ST16).

In a case where the transmission processing of all blocks is not completed (step ST16: NO), the control device 11 performs the processing in step ST12 again.

In a case where the transmission processing of all blocks is completed (step ST16: YES), the control device 11 advances the processing to the next step ST17.

Next, the second instruction unit 115 of the control device 11 instructs each individual microcomputer to determine whether or not there is a data transmission error for all the rewrite data (all blocks) received by the individual microcomputer included in each of the two or more specific units (step ST17).

Next, the control device 11 determines whether or not a notification of a data transmission error has been received from any of the microcomputers (step ST18).

In a case where the notification of the data transmission error is received (step ST18: YES), the second instruction unit 115 instructs erasing of all blocks written in the non-volatile memory of the microcomputer which notifies the data transmission error (step ST15-8).

The mode change unit 112 individually performs a change to make the rewrite data unreceivable in advance for the microcomputer which does not notify the data transmission error, and then the program transmission unit 113 performs the simultaneous transmission of the divided portion of the rewrite data again from the beginning (step ST15-9). Thereafter, the processing in step ST13 is performed again.

In addition, the mode change unit 112 may perform the change of the reception of the rewrite data for the microcomputer which does not notify the data transmission error before the instruction to erase all blocks by the second instruction unit 115 (step ST15-8).

In a case where the notification of the data transmission error is not received (step ST18: NO), the control device 11 advances the processing to the next step ST19.

Next, the mode change unit 112 of the control device 11 individually performs a change to make the rewrite data unreceivable for the microcomputer included in each of the two or more specific units (step ST19).

The processing in step ST19 is triggered, and the microcomputer performs step ST29 described later.

In this way, the rewriting processing from the operation control program included in the microcomputer included in each of the two or more specific units to the rewrite data by the control device 11 is performed (ended).

The processing performed by the microcomputer included in one specific unit will be described with reference to FIGS. 8 and 9 in correspondence with each processing of the control device 11.

First, the microcomputer triggers the processing in step ST11 described above, and erases the rewrite area in the non-volatile memory of the microcomputer in accordance with the change to make the rewrite data receivable by the mode change unit 112 (step ST21).

Next, the microcomputer receives each of the rewrite data divided in packet units from the program transmission unit 113 (step ST22). The rewrite data divided in packet units is temporarily stored in the volatile memory of the microcomputer after being received.

Next, the microcomputer determines whether or not there is a data transmission error for a block, which is a set of the rewrite data divided in packet units, in response to the instruction from the first instruction unit 114 (step ST23-1).

In a case where there is a data transmission error (step ST23-1: YES), the microcomputer notifies the control device 11 of the transmission error (step ST24-1), and erases the block for which the transmission error is determined in response to the instruction from the first instruction unit 114 (step ST24-2). Thereafter, the microcomputer performs the processing in step ST22 again.

In a case where there is no data transmission error (step ST23-1: NO), the microcomputer advances the processing to the next step ST26.

Next, the microcomputer sequentially writes the rewrite data for a predetermined capacity (one block) into the non-volatile memory (step ST23-2).

The processing in steps ST23-1 to ST23-2 is performed in response to the instruction from the first instruction unit 114 each time the microcomputer receives the rewrite data for one block as step STN.

Next, the microcomputer determines whether or not the reception of all the rewrite data (all blocks) is completed (step ST26).

In a case where the reception of all the blocks is not completed (step ST26: NO), the microcomputer performs the processing in step ST22 again.

In a case where the reception of all the blocks is completed (step ST26: YES), the microcomputer advances the processing to the next step ST27.

Next, the microcomputer determines whether or not there is a data transmission error for all the received rewrite data (all blocks) (step ST27).

In a case where there is a transmission error (step ST27: YES), the microcomputer notifies the control device 11 of the transmission error (step ST24-8), and erases all the blocks written in the non-volatile memory in response to the instruction from the second instruction unit 115 (step ST24-9). Thereafter, the microcomputer performs the processing in step ST22 again.

In a case where there is no transmission error (step ST27: NO), the microcomputer advances the processing to the next step ST28.

Next, the microcomputer completes the writing of the received rewrite data (step ST28).

Next, the microcomputer locks the rewrite area in accordance with the change in which the rewrite data is not receivable by the mode change unit 112 (step ST29).

In this way, the processing is merged with the processing of the control device 11 via the coupler C2. (END)

### (Action and Effect)

According to the control device of the present embodiment, before the rewrite data is simultaneously transmitted, each of the microcomputers provided in two or more specific units is individually changed to be able to receive the rewrite data. By changing the specific units in advance to be able to receive the rewrite data, only the specific units enabled to receive the rewrite data can receive the rewrite data that is simultaneously transmitted. In this manner, the control device can simultaneously transmit the rewrite data. By enabling the simultaneous transmission, the time can be shortened as compared with a case where the control device individually transmits the rewrite data while performing the communication connection with the specific unit and the operation control program provided in the specific unit is rewritten with the rewrite data.

Therefore, the control device according to the present disclosure can shorten the time required for the rewrite work.

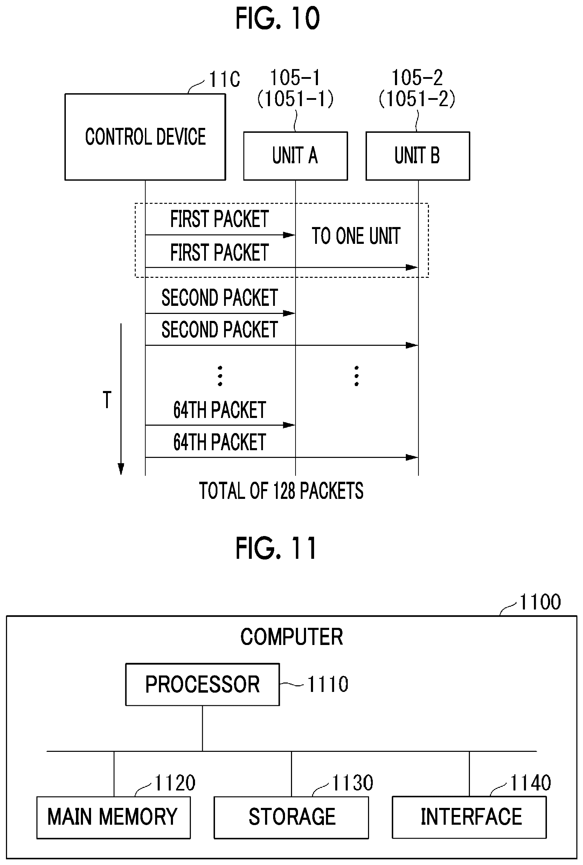

FIG. 10 shows a comparative example.

As disclosed in FIG. 10, in the comparative example, the control device 11C individually transmits the rewrite data while performing the communication connection with the specific unit, and the operation control program provided in the specific unit is rewritten with the rewrite data.

As shown in FIG. 10, for example, in a case where the control device 11C performs the rewrite on the microcomputers (the microcomputer 1051-1 and the microcomputer 1051-2) provided in each of the two specific units (the unit A and the unit B: the indoor unit 105-1 and the indoor unit 105-2), the following occurs. The first packet is first transmitted to the microcomputer 1051-1 of the unit A by the serial communication, and then the first packet is transmitted to the microcomputer 1051-2 of the unit B. After the first packet is transmitted to all the specific units, the second packet is transmitted to all the specific units, and the 64th packet is finally transmitted by repeating the same process. These packets are transmitted in accordance with the elapse of the time axis T shown in the drawing.

Therefore, there is a problem in that the amount of packets to be transmitted increases in proportion to the number of specific units that individually perform the communication connection.

In the control device according to the present disclosure, only the specific units enabled to receive the rewrite data can receive the rewrite data that is simultaneously transmitted, as compared with the comparative example. As a result, the control device 11 can simultaneously transmit the rewrite data. The simultaneous transmission enables the amount of packets of the rewrite data to be transmitted to be reduced. Further, the amount of packets of the rewrite data to be transmitted is reduced, so that the work time required for transmitting the rewrite data is also shortened.

Therefore, the control device according to the present disclosure can shorten the time required for the rewrite work.

### (Other Embodiments)

The embodiment of the present disclosure has been described in detail above with reference to the drawings. However, the specific configuration is not limited to the embodiment, and includes design changes and the like without departing from the gist of the present disclosure.

In the above embodiment, it has been described that "the number of specific units is two or more, and a plurality of outdoor units 104 or a plurality of indoor units 105 among all units correspond thereto". However, the present disclosure is not limited thereto. For example, it may be described that "the number of specific units is two or more, and a plurality of outdoor units 104 and a plurality of indoor units 105 among all units correspond thereto."

In the above embodiment, it has been described that "the acquisition unit 111 acquires rewrite data from the remote monitoring device 13 via the network 12". However, the timing at which the acquisition unit 111 acquires the rewrite data may be arbitrary.

In addition, in a case where the rewrite data is already present in the storage unit 116, the acquisition unit 111 may check the version of the rewrite data provided from the remote monitoring device 13, and in a case where the version is the same as the version of the rewrite data present in the storage unit, the acquisition unit 111 may acquire the rewrite data from the storage unit.

FIG. 11 is a hardware configuration diagram illustrating a configuration of a computer 1100 according to the present embodiment. For example, the computer 1100 includes a processor 1110, a main memory 1120, a storage 1130, and an interface 1140.

Each functional unit of the control device 11 is implemented in the computer 1100. An operation of each functional unit described above is stored in the storage 1130 in a form of a program. The processor 1110 reads the program from the storage 1130, develops the read program in the main memory 1120, and executes the above-described processing in accordance with the program. In addition, the processor 1110 secures a storage area that is used by each of the above-described functional units in the main memory 1120 in accordance with the program.

The program may be intended to realize some of functions fulfilled by the computer 1100. For example, the program may fulfill a function in combination with another program previously stored in the storage 1130, or in combination with another program installed in another device. In addition, the computer 1100 may include a custom large scale integrated circuit (LSI) such as a programmable logic device (PLD) in addition to or in place of the above-described configuration. As examples of the PLD, a programmable array logic (PAL), a generic array logic (GAL), a complex programmable logic device (CPLD), and a field programmable gate array (FPGA) can be given. In this case, functions that are realized by the processor 1110 may be partially or entirely realized by the integrated circuit.

As an example of the storage 1130, a magnetic disk, a magneto-optical disk, or a semiconductor memory can be used. The storage 1130 may be an internal medium directly connected to a bus of the computer 1100 or may be an external medium connected to the computer 1100 through the interface 1140 or a communication line. In addition, when this program is distributed to the computer 1100 via the communication line, the computer 1100 receiving the distributed program may deploy the program in the main memory 1120 to execute the above-described process. In addition, the program may be used to partially realize the above-described functions. In addition, the program may be a so-called difference file (difference program) that realizes the above-described functions in combination with another program previously stored in the storage 1130.

### <Additional Notes>

The control device 11 described in each embodiment is understood as follows.

Some or all of the embodiments can be described as in the following additional notes, but are not limited to the following.

### (Additional Note 1)

(1) A control device 11 of an air conditioner according to a first aspect includes: a mode change unit 112 that individually performs a change that enables a plurality of outdoor units 104 or a plurality of indoor units 105 to receive rewrite data that is simultaneously transmitted; and a program transmission unit 113 that divides the rewrite data and simultaneously transmits each divided portion of the rewrite data to the plurality of outdoor units 104 or the plurality of indoor units 105.

According to such a configuration, before simultaneously transmitting each of the rewrite data, a change of making the rewrite data receivable is individually performed on the microcomputer included in each of the two or more specific units in advance. By changing the specific units in advance to be able to receive the rewrite data, only the specific units enabled to receive the rewrite data can receive the rewrite data that is simultaneously transmitted. As a result, the control device 11 can simultaneously transmit the rewrite data. By enabling simultaneous transmission, it is possible to shorten the time compared to a case where the control device 11 individually transmits the rewrite data while performing communication connection with the specific unit and rewrites the operation control program included in the specific unit with the rewrite data.

Therefore, the control device 11 according to the present disclosure can shorten the time required for the rewrite work.

### (Additional Note 2)

(2) The control device 11 according to a second aspect is the control device according to (1), which further includes: a first instruction unit 114 that issues an instruction to the plurality of outdoor units 104 or the plurality of indoor units 105 to determine whether or not a data transmission error has occurred in each divided portion of the rewrite data to be received, in which the first instruction unit 114 issues the instruction in a case where a total of the divided portion of the rewrite data reaches a predetermined capacity.

According to such a configuration, when a certain capacity is accumulated, the rewrite processing can be performed on the non-volatile memory of the microcomputer at an early stage. Therefore, the time required for the rewrite work is shortened.

Therefore, the control device 11 according to the present disclosure can shorten the time required for the rewrite work.

In addition, when the predetermined capacity is associated with the erase unit of the non-volatile memory, the address of the erased block and the address of the block that should be originally created can be associated with each other, and as a result, the rewrite processing is smoothly performed.

### (Additional Note 3)

(3) A control system 1 of an air conditioner according to a third aspect includes: the control device of an air conditioner according to (1) or (2); the plurality of outdoor units 104 or the plurality of indoor units 105; and a remote monitoring device 13 that requests reception of the rewrite data remotely.

According to such a configuration, the remote monitoring device 13 can issue an instruction for a timing at which the operation control program included in the specific unit is rewritten with the rewrite data. Therefore, it is not necessary for the operator to go to a site of the specific unit to perform the rewrite work.

Therefore, the control system 1 for an air conditioner according to the present disclosure can shorten the time required for the rewrite work.

### (Additional Note 4)

(4) A control system 1 of an air conditioner according to a fourth aspect is the control system of an air conditioner according to (3), in which a change that enables the plurality of outdoor units 104 or the plurality of indoor units 105 to receive the rewrite data is individually performed by the control device 11 of an air conditioner, and the plurality of outdoor units 104 or the plurality of indoor units 105 enabled to receive the rewrite data receive the rewrite data that is simultaneously transmitted.

According to such a configuration, the control device 11 can change the specific unit in advance to be capable of receiving the rewrite data in accordance with the instruction from the remote monitoring device 13. As a result, only the specific units enabled to receive the rewrite data can receive the rewrite data that is simultaneously transmitted. That is, the control device 11 can simultaneously transmit the rewrite data. By enabling the simultaneous transmission, the time can be shortened as compared with a case where the control device individually transmits the rewrite data while performing the communication connection with the specific unit and the operation control program provided in the specific unit is rewritten with the rewrite data.

Therefore, the control system 1 for an air conditioner according to the present disclosure can shorten the time required for the rewrite work.

### (Additional Note 5)

(5) A control method according to a fifth aspect includes: a step of individually performing a change that enables a plurality of outdoor units 104 or a plurality of indoor units 105 to receive the rewrite data that is simultaneously transmitted; and a step of dividing the rewrite data and simultaneously transmitting each divided portion of the rewrite data to the plurality of outdoor units 104 or the plurality of indoor units 105.

According to such a configuration, before simultaneously transmitting each of the rewrite data, a change of making the rewrite data receivable is individually performed on the microcomputer included in each of the two or more specific units in advance. By changing the specific units in advance to be able to receive the rewrite data, only the specific units enabled to receive the rewrite data can receive the rewrite data that is simultaneously transmitted. As a result, the control device 11 can simultaneously transmit the rewrite data. By enabling simultaneous transmission, it is possible to shorten the time compared to a case where the control device 11 individually transmits the rewrite data while performing communication connection with the specific unit and rewrites the operation control program included in the specific unit with the rewrite data.

Therefore, the control method according to the present disclosure can shorten the time required for the rewrite work.

### (Additional Note 6)

(6) A program according to a sixth aspect causes a computer to execute: a step of individually performing a change that enables a plurality of outdoor units 104 or a plurality of indoor units 105 to receive the rewrite data that is simultaneously transmitted; and a step of dividing the rewrite data and simultaneously transmitting each divided portion of the rewrite data to the plurality of outdoor units 104 or the plurality of indoor units 105.

According to such a configuration, before simultaneously transmitting each of the rewrite data, a change of making the rewrite data receivable is individually performed on the microcomputer included in each of the two or more specific units in advance. By changing the specific units in advance to be able to receive the rewrite data, only the specific units enabled to receive the rewrite data can receive the rewrite data that is simultaneously transmitted. As a result, the control device 11 can simultaneously transmit the rewrite data. By enabling simultaneous transmission, it is possible to shorten the time compared to a case where the control device 11 individually transmits the rewrite data while performing communication connection with the specific unit and rewrites the operation control program included in the specific unit with the rewrite data.

Therefore, the program according to the present disclosure can shorten the time required for the rewrite work.

### Industrial Applicability

According to the above-described aspect, the time required for the rewrite work can be shortened.

### Reference Signs List

1: control system
10: air conditioning system
104: plurality of outdoor units
1041: plurality of microcomputers
105: plurality of indoor units
1051: plurality of microcomputers
106: communication line
11: control device
111: acquisition unit
112: mode change unit
113: program transmission unit
114: first instruction unit
115: second instruction unit
116: storage unit
12: network
13: remote monitoring device

## Claims

1. A control device of an air conditioner comprising:
a mode change unit that individually performs a change that enables a plurality of outdoor units or a plurality of indoor units to receive rewrite data that is simultaneously transmitted; and
a program transmission unit that divides the rewrite data and simultaneously transmits each divided portion of the rewrite data to the plurality of outdoor units or the plurality of indoor units.

2. The control device of an air conditioner according to claim 1, further comprising:
a first instruction unit that issues an instruction to the plurality of outdoor units or the plurality of indoor units to determine whether or not a data transmission error has occurred in each divided portion of the rewrite data to be received,
wherein the first instruction unit issues the instruction in a case where a total of the divided portion of the rewrite data reaches a predetermined capacity.

3. A control system of an air conditioner comprising:
the control device of an air conditioner according to claim 1 or 2;
the plurality of outdoor units or the plurality of indoor units; and
a remote monitoring device that requests reception of the rewrite data remotely.

4. The control system of an air conditioner according to claim 3,
wherein a change that enables the plurality of outdoor units or the plurality of indoor units to receive the rewrite data is individually performed by the control device of an air conditioner, and the plurality of outdoor units or the plurality of indoor units enabled to receive the rewrite data receive the rewrite data that is simultaneously transmitted.

5. A control method comprising:
a step of individually performing a change that enables a plurality of outdoor units or a plurality of indoor units to receive rewrite data that is simultaneously transmitted; and
a step of dividing the rewrite data and simultaneously transmitting each divided portion of the rewrite data to the plurality of outdoor units or the plurality of indoor units.

6. A program causing a computer to execute:
a step of individually performing a change that enables a plurality of outdoor units or a plurality of indoor units to receive rewrite data that is simultaneously transmitted; and
a step of dividing the rewrite data and simultaneously transmitting each divided portion of the rewrite data to the plurality of outdoor units or the plurality of indoor units.
